# EUROPÄISCHE PATENTANMELDUNG

(11) **EP 1 014 600 A2**
(43) Veröffentlichungstag der Anmeldung: **28.06.2000**
(21) Anmeldenummer: 99124314.8
(22) Anmeldetag: 06.12.1999
(51) Int. Cl.: H04B 7/26, G01C 21/36, G08G 1/0967

(54) **Informationssystem und Verfahren zu dessen Betreibung**

(30) Priorität: 18.12.1998 DE 19858450
(71) Anmelder: Baur, Siegmund, 88693 Deggenhausertal (DE)
(72) Erfinder: Baur, Siegmund, 88693 Deggenhausertal (DE)
(74) Vertreter: Daub, Nicole

(57) **Zusammenfassung**

Die Erfindung geht aus von einem Informationssystem für eine oder mehrere Personen (10, 12) für ein örtlich begrenztes Gebiet, wie insbesondere größere Gebäude, Gebäudekomplexe, Städte, Innenstädte, mit zumindest einem mobilen Informationselement (14, 16, 18, 52) das ein Rechenwerk, zumindest einen elektronischen Speicher (20) und eine Eingabe- und Ausgabevorrichtung aufweist.

Es wird vorgeschlagen, daß im elektronischen Speicher (20) Informationen über das örtlich begrenzte Gebiet gespeichert sind, die vom Benutzer (10) des mobilen Informationselements (14) einzeln über die Eingabe- und Ausgabevorrichtung unterstützt vom Rechenwerk abrufbar sind.

## Beschreibung

### Stand der Technik

Die Erfindung geht aus von einem Informationssystem und einem Verfahren nach der Gattung der unabhängigen Ansprüche.

Gebäudekomplexe, wie beispielsweise Flughäfen, Bahnhöfe, Einkaufszentren, Messen usw., sowie Städte und Innenstädte werden immer größer. Ferner sollten einzelne Aktivitäten immer zeitsparender durchgeführt werden können.

Bekannt ist dem einzelnen Besucher Informationen über Tafeln mitzuteilen, beispielsweise Abflugzeiten von Flugzeugen, Wegbeschreibungen von einem Standort zu einem gewünschten Zielort, Eigenschaften über Gegenstände und Firmen usw. Die einzelnen Besucher besitzen in der Regel unterschiedliche Ziele und Forderungen. Werden für jeden Einzelnen sämtliche für ihn relevanten und interessanten Informationen angezeigt, werden die Tafeln oder auch Prospekte, beispielsweise Messeprospekte, unübersichtlich und unhandlich. Die Informationen müssen auf das Notwendigste beschränkt werden, wobei selbst die beschränken Informationen häufig zu einer unübersichtlichen Informationsflut auf Tafeln oder Prospekten führen.

Aus der DE 196 16 152 A1 ist ein drahtloses Informationssystem bekannt. Das Informationssystem besitzt mindestens einen Infrarotsender an einem ausgewählten Standort mit einem Informationsspeicher. Aus dem Informationsspeicher werden mit einem Mikrocontroller die gespeicherten Informationen zyklisch ausgelesen und gesendet. Ferner besitzt das Informationssystem tragbare Infrarotempfänger, die die Informationen innerhalb der örtlichen Reichweite der Infrarotsender empfangen. Die Infrarotempfänger enthalten einen Mikrocontroller, einen Informationsspeicher für empfangene Informationen, einen Zusatzspeicher für ein Dienstprogramm, eine Tastatur zur Eingabe von Selektionsdaten, die aus dem Informationsspeicher auszulesende selektive Informationen festlegen, und eine Anzeigeeinrichtung zum Anzeigen der ausgelesenen selektiven Informationen. Die Informationen werden nur in eine Richtung bzw. unidirektional vom Infrarotsender in den Speicher des Infrarotempfängers übertragen. Aus dem Speicher des Infrarotempfängers kann der Benutzer für seinen individuellen persönlichen Gebrauch Informationen auswählen. Für das in der DE 196 16 152 A1 beschriebene Informationssystem muß ein Netz von Infrarotsender aufgebaut werden, die mit speziell auf die Infrarotsender abgestimmten Infrarotempfängern kommunizieren.

Ferner ist aus der DE 44 37 360 A1 ein Informationssystem für Touristen bekannt. Das Informationssystem besitzt ein mobiles Bauteil mit einem CD-ROM-Laufwerk (CD: Compact Disk; ROM: Read Only Memory), einem GPS-Empfänger (GPS: Global positioning system) und einer CD-ROM. Auf der CD-ROM sind Landkarten, Straßenkarten und Stadtpläne sowie touristische Informationen abgespeichert. Kommt der Benutzer in die Nähe bestimmter Gebäude, wie beispielsweise Sehenswürdigkeiten, werden entsprechende touristische Informationen automatisch ausgegeben. Eine manuelle Auswahl bestimmter Informationen ist nicht vorgesehen.

Aus der DE 196 02 588 A1 ist ein Verfahren zur Standortbestimmung von abgelegten Gegenständen bekannt. Vor der Ablage werden einzelnen Gegenstände mit einem elektronischen Datenträger versehen, in dem eine den jeweiligen Gegenstand individuelle kennzeichnende Kennung abgespeichert ist. In einem separaten Datenspeicher werden Informationen über die einzelnen abgelegten Gegenstände zusammen mit der jeweils zugehörigen Kennung abrufbar gespeichert. Zur Standortbestimmung eines der abgelegten Gegenstände wird dessen individuelle Kennung dem separaten Datenspeicher entnommen und mittels eines Funkgeräts als Suchsignal ausgesendet. Die ausgesendete Kennung wird in den elektronischen Datenträgern, die mit dem Funkgerät in Wirkverbindung stehen, mit der in dem jeweiligen elektronischen Datenträger abgespeicherten Kennung verglichen. Nur derjenige Datenträger, bei dem die beiden Kennungen übereinstimmen, sendet auf die Suchsignale des Funkgeräts Antwortsignale über den Ort des gesuchten Gegenstands aus. Als Suchsignale werden vorzugsweise Mikrowellensignale, Millimeterwellensignale oder Infrarotsignale ausgesendet.

Aufgabe der Erfindung ist, ein möglichst einfaches und flexibles Informationssystem zu schaffen, das mit möglichst geringem Aufwand installiert und betrieben werden kann.

Die Aufgabe wird erfindungsgemäß jeweils durch die Merkmale der unabhängigen Ansprüche gelöst, während vorteilhafte Ausgestaltungen und Weiterbildungen der Erfindung den Unteransprüchen entnommen werden können.

### Vorteile der Erfindung

Das Informationssystem nach Anspruch 1 besitzt ein mobiles Informationselement, das ein Rechenwerk, insbesondere einen Mikroprozessor, zumindest einen elektronischen Speicher und zumindest eine Eingabe- und Ausgabevorrichtung aufweist. Elektronische Speicher können grundsätzlich in zwei Gruppen eingeteilt werden, und zwar in Festwertspeicher (ROM: Read Only Memory), in denen die Informationen fest eingeschrieben sind und nur ausgelesen werden können, beispielsweise CD-ROM usw., und in Schreib-Lese-Speicher (RAM: Random Access Memory), beispielsweise Magnetplatten, Disketten, Mini CD's usw., wobei Speicher beider Gruppen im erfindungsgemäßen Informationselement eingesetzt werden können. Im Speicher sind Informationen über das örtlich begrenzte Gebiet gespeichert. Beispielsweise bei Messen Wegbeschreibungen zu einem bestimmten Messestand von verschiedenen Standpunkten, Informationen über ausgestellte Gegenstände auf der Messe usw. Bei Flughäfen und Bahnhöfen Wegbeschreibungen von verschiedenen Standorten zu Eincheckstellen bzw. Durchgängen, Restaurants, Geschäften, Toiletten usw. Bei Einkaufszentren Wegbeschreibungen von verschiedenen Standpunkten zu verschiedenen Waren und/oder Warengruppen bzw. wo welche Waren zu finden sind, beispielsweise Damenoberbekleidung, Herrenschuhe usw. Bei Städten und Innenstädten Wegbeschreibungen von verschiedenen Standpunkten zu verschiedenen Einkaufsmöglichkeiten, Restaurants, Sehenswürdigkeiten usw. und/oder Informationen über einzelne Standorte, wie über Restaurants, Sehenswürdigkeiten usw. Informationen können einzeln oder gebündelt abgerufen werden. Der Benutzer kann die für ihn relevanten Informationen detailliert übersichtlich und zeitsparend abrufen.

Das Speicherelement ist vorzugsweise austauschbar ausgeführt, wodurch bei auftretenden Informationsänderungen das Informationselement wieder auf den aktuellen Stand gebracht werden kann, beispielsweise bei einer neuen Messe, bei einer Erweiterung des Flughafens oder des Bahnhofs oder bei sich verändernden Einkaufsmöglichkeiten in Städten und Innenstädten usw. Im Informationselement sind die Informationen im Speicherelement gespeichert. Sendeeinheiten und Empfangseinheiten sind nicht erforderlich und das Informationssystem kann schnell und kostengünstig installiert werden.

Ferner ist möglich, daß das mobile Informationselement über Funk mit zumindest einem stationären Informationselement verbunden ist, in dem Informationen zum örtlich begrenzten Gebiet abgespeichert sind, die über Funk vom Benutzer einzeln und/oder gebündelt abgerufen werden können. Das Informationssystem ist dadurch besonders flexibel. Informationsänderungen, insbesondere kurzfristige, sich laufend ändernde Informationen können schnell und einfach berücksichtigt werden, wie beispielsweise Abflugzeiten und Ankunftszeiten von Flugzeugen.

Besonders vorteilhaft ist das Informationselement über ein Mobilfunknetz für Mobiltelefone mit dem stationären Informationselement verbunden. Im örtlich begrenzten Gebiet kann ein eigenes Mobilfunknetz aufgespannt werden, so daß über ein oder mehrere Sendestationen mit dem stationären Informationselement eine Funkverbindung aufgenommen werden kann. Es entsteht damit ein Informationssystem, das mit einer Telefonanlage in einem Haus verglichen werden kann, wobei die mobilen Informationselemente mit schnurlosen Haustelefonen gleichgesetzt werden können und das stationäre Informationselement mit einer Art Anrufbeantworter gleichgesetzt werden kann, in dem Informationen gespeichert sind, die über die Haustelefone einzeln abgefragt werden können.

Besonders vorteilhaft können jedoch auch bereits bestehende oder auch in Zukunft entstehende Mobilfunknetze genutzt werden, beispielsweise das D1-, das D2- und/oder das E-Netz usw. Der Aufbau eines zusätzlichen Funknetzes kann dadurch gespart werden. Es werden ausgereifte und kostengünstige Technologien genutzt. Der Aufwand, ein entsprechendes Informationssystem zu installieren und zu betreiben, kann trotz hoher Flexibilität des Informationssystems auf eine Minimum reduziert werden.

Um standortbezogene Informationen ausgeben zu können, beispielsweise eine Wegbeschreibung von einem Standort zu einem gewünschten Zielort und/oder Informationen über einen bestimmten Standort, wie über ein Restaurant, einen Messestand, eine ausgestellte Maschine usw., muß vom Informationssystem erfaßt werden wo sich der Benutzer befindet. Dies kann dadurch geschehen, daß der Benutzer seinen Standort manuell eingibt, beispielsweise indem eine Bezeichnung eines Messestands, einer Eingangstür usw. durch Sprache oder durch eine Tastatur, eingegeben wird.

In einer Ausgestaltung wird vorgeschlagen, daß das Informationssystem automatisch über Funk erfaßt, wo sich der einzelne Benutzer befindet und abhängig vom Standort entsprechende Informationen bereit stellt. Der Standort kann beispielsweise bestimmt werden, indem eine Laufzeit und eine Ausrichtung der Funkwellen bestimmt wird. Ferner sind weitere dem Fachmann als geeignet erscheinende, geläufige Methoden möglich. Durch die automatische Standortbestimmung steigt der Komfort des Informationssystems an. Ferner kann Zeit durch den Wegfall der Standorteingabe gespart werden.

Informationen können vollständig im stationären Informationselement gespeichert sein und/oder zumindest teilweise in einem elektronischen Speicher im mobilen Informationselement. Treten Informationsänderungen auf, kann der elektronische Speicher ausgetauscht werden oder es können vorteilhaft bei einem funkunterstützten Informationssystem neue Informationen über Funk in den Speicher übertragen werden. Informationsänderungen können schnell mit geringem Aufwand berücksichtigt werden.

Die Anzahl der Nutzer von Mobiltelefonen nimmt schnell zu. Nach Schätzungen von Betreibern werden im Frühjahr 1999 20 Prozent der deutschen Bevölkerung mobil telefonierten, während es Ende 1997 noch 10 Prozent gewesen sind. In einer Ausgestaltung der Erfindung wird vorgeschlagen, daß das Informationselement ein Mobiltelefon ist. Das Informationselement kann mit einem vom Benutzer erworbenen Mobiltelefon kombiniert werden. Zusätzliche Geräte und damit verbundene Kosten werden gespart und der Besucher kann sein eigenes, ihm gewohntes Gerät benutzen. Ferner müssen keine Vorkehrungen getroffen werden, daß der Besucher das Gerät beim Verlassen des örtlich begrenzten Gebiets abgibt. Das Informationselement kombiniert mit einem Mobiltelefon ist das Eigentum des Besuchers und kann in dessen Besitz bleiben.

Möglich ist jedoch auch, daß das Informationselement, das gleichzeitig ein Mobiltelefon ist, von einer Organisation des örtlich begrenzten Gebiets ausgegeben wird. Mit dem Informationselement kann ein zusätzlicher Service geboten werden, beispielsweise daß Reisende auf einem Flughafen nach einem Taxi oder nach Hause telefonieren können, um abgeholt zu werden usw. Um sicher zu stellen, daß das von der Organisation ausgegebene Informationselement beim Verlassen des örtlich begrenzten Gebiets wieder abgegeben wird, wird dieses vorteilhaft an einem Fahrzeug bzw. an einem Wagen befestigt, beispielsweise an einem Gepäckwagen, Einkaufswagen, Messewagen usw., der gemeinsam mit dem Informationselement ausgegeben und wieder abgegeben wird. Ferner hat die Befestigung an einem Fahrzeug den Vorteil, daß die Bewegungsrichtung und Ausrichtung des Besuchers bzw. Benutzers des Informationselements an der Ausrichtung des Fahrzeugs erkannt und die zurückgelegte Strecke mit dem Fahrzeug leicht erfaßt werden kann, beispielsweise mit einem Kilometerzähler an Rädern des Fahrzeugs. Eine Wegbeschreibung kann leichter durchgeführt und der Standort einfacher bestimmt werden. Das Fahrzeug kann ferner gleichzeitig dazu dienen ein oder mehrere Besucher zu befördern, beispielsweise ein Elektrofahrzeug auf besonders großen Flughäfen, Messen, Innenstädte usw.

Um die gewünschten Informationen möglichst einfach und zeitsparend abrufen zu können, wird der Benutzer des Informationselements bei der Eingabe und Auswahl von Informationen vorteilhaft durch ein Dienstprogramm akustisch und/oder optisch unterstützt, beispielsweise werden dem Benutzer Fragen nach seinem aktuellen Standort, nach gewünschten Waren, nach einem Zielort, nach einem gewünschten Messestand usw. gestellt. Eine akustische Verständigung zwischen dem Benutzer und dem Informationselement findet vorzugsweise über einen Kopfhörer und über ein am Kopf getragenes Mikrophon statt. Die Verständigung wird weniger von Außengeräuschen und Dritte werden weniger durch die Verständigung gestört. Um fremdsprachigen Benutzern die Verständigung mit dem Informationselement zu erleichtern, können Informationen vorteilhaft mehrsprachig eingegeben werden und die gesuchten Informationen mehrsprachig ausgegeben werden.

Wird die Eingabe und Auswahl optisch geführt, wird vorteilhaft eine gängige Oberfläche benutzt, und zwar eine sogenannte 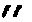 Windowtechnik", bei der Fenster auf einem Bildschirm mit unterschiedlichen Informationen geöffnet und geschlossen werden können.

Die Eingabe und Auswahl bestimmter Informationen kann über eine Tastatur erfolgen, die vorteilhaft als Kontaktfeld auf einem Bildschirm ausgeführt ist. Kontaktfelder sind pflegeleicht und können leicht verschiedenen Verhältnissen angepaßt werden, beispielsweise kann das Kontaktfeld für verschiedene Messen unterschiedlich gestaltet werden. Besonders komfortabel ist die Eingabe von Informationen über die akustische Sprache. Der Benutzer kann in kurzer Zeit viele Informationen eingeben und gleichzeitig seine Hände für andere Aktivitäten nutzen. Ferner können Informationen über ein Bedienelement eingegeben werden, mit dem ein Zeiger auf dem Bildschirm geführt und einzelne Details ausgewählt werden können. Das Bedienelement kann vorteilhaft so gestaltet werden, daß der Benutzer gleichzeitig mit den Händen andere Aktivitäten ausführen kann, beispielsweise schieben eines Gepäckwagens.

In einer Ausgestaltung der Erfindung wird ferner vorgeschlagen, das Informationselement mit einer Leseeinheit auszuführen, mit der Informationen von einem Ticket erfaßt und abhängig von den erfaßten Informationen Informationen bereitgestellt werden. Beispielsweise kann von einem Flugticket die Abflugzeit und die Abflugstelle erfaßt werden, von einem Einkaufsgutschein der Ort der Einkaufsstätte, bei einer Einladung auf einen Messestand der Ort des Messestands, von einem Parkticket der Ausgangsstandpunkt, von dem aus eine Wegbeschreibung durchgeführt und zu dem der Benutzer wieder zurückgeführt werden kann usw. Die Eingabe erforderlicher Informationen wird reduziert und der Komfort gesteigert.

Die Ausgabe der gesuchten Informationen kann wie die Ausgabe von Informationen zur Unterstützung der Eingabe und Auswahl von Informationen optisch über eine Anzeigevorrichtung erfolgen, beispielsweise über einen Bildschirm bzw. Display eines Mobiltelefons, und/oder akustisch über einen Lautsprecher oder Kopfhörer. Werden die Informationen akustisch ausgegeben, kann der Benutzer bei der Ausgabe gleichzeitig mit den Augen andere Informationen aufnehmen, beispielsweise in welche Richtung tatsächlich zu laufen ist und ob der richtige Ort bereits erreicht ist usw.

Um möglichst über eine lange Zeit eine ausreichende Energieversorgung für das Informationselement zu erhalten, wird dieses in einer Ausgestaltung der Erfindung unterstützend oder vollständig mit Solarenergie versorgt. Solarzellen können besonders vorteilhaft an einem Fahrzeug befestigt werden, beispielsweise an einem Einkaufswagen, Messewagen, Gepäckwagen usw., die hierfür große Flächen aufweisen.

Wie bereits ausgeführt, werden die Innenstädte und insbesondere die Fußgängerzonen immer größer. Um die Städte vom Kraftfahrzeugverkehr zu entlasten, werden ferner immer mehr sogenannte Park-and-ride-Systeme errichtet, d.h. es werden immer mehr Möglichkeiten geschaffen, daß ein Besucher einer Stadt sein Kraftfahrzeug am Stadtrand parken bzw. abstellen und mit öffentlichen Verkehrsmitteln in die Innenstadt weiterfahren kann. Um den Besucher auf dem Weg in die Stadt mit den gewünschten und erforderlichen Informationen möglicherweise mehrsprachig komfortabel zu versorgen, beispielsweise mit welcher Straßenbahn er vorzugsweise fahren soll, um ein bestimmtes Ziel zu erreichen, Entfernungen zu bestimmten Geschäften, Sehenswürdigkeiten, erforderlicher Zeitaufwand, Öffnungszeiten usw., bietet sich der Einsatz des erfindungsgemäßen Informationssystems an. Wird ein mobiles Informationselement ausgegeben, wird in einem Verfahren zur Anwendung des Informationssystems vorgeschlagen, daß das mobile Informationselement beim Parken eines Kraftfahrzeugs ausgegeben wird, beispielsweise an einem Parkautomat eines Parkhauses, und vom Benutzer abgegeben werden muß, um das Kraftfahrzeug abzuholen. Damit wird sicher gestellt, daß das mobile Informationselement zurückgegeben wird. Ferner kann mit dem mobilen Informationselement der Benutzer einfach zu seinem Kraftfahrzeug zurückgeführt werden, beispielsweise indem das Parkhaus als Standort im mobilen Informationselement gespeichert ist und eine Wegbeschreibung zurück zu diesem Parkhaus von verschiedenen Standpunkten abgerufen werden kann. Neben der Ausgabe von mobilen Informationselementen, können jedoch auch Mobiltelefone als mobile Informationselemente für das Informationssystem genutzt werden, die im Eigentum des einzelnen Besuchers sind. Vorkehrungen für eine gesicherte Rückgabe der mobilen Informationselemente können entfallen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines an einem Fahrzeug befestigten mobilen Informationselements,
- Fig. 2: eine vergrößerte Darstellung eines Informationselements aus der mit II in Fig. 1 und 3 bezeichneten Sichtrichtung eines Benutzers,
- Fig. 3: eine schematische Darstellung mobiler, funkunterstützter Informationselemente,
- Fig. 4: eine schematische Darstellung einer Anwendungsmöglichkeit und
- Fig. 5: ein tragbares mobiles Informationselement zum Entnehmen aus einem Parkautomaten.

### Beschreibung der Ausführungsbeispiele

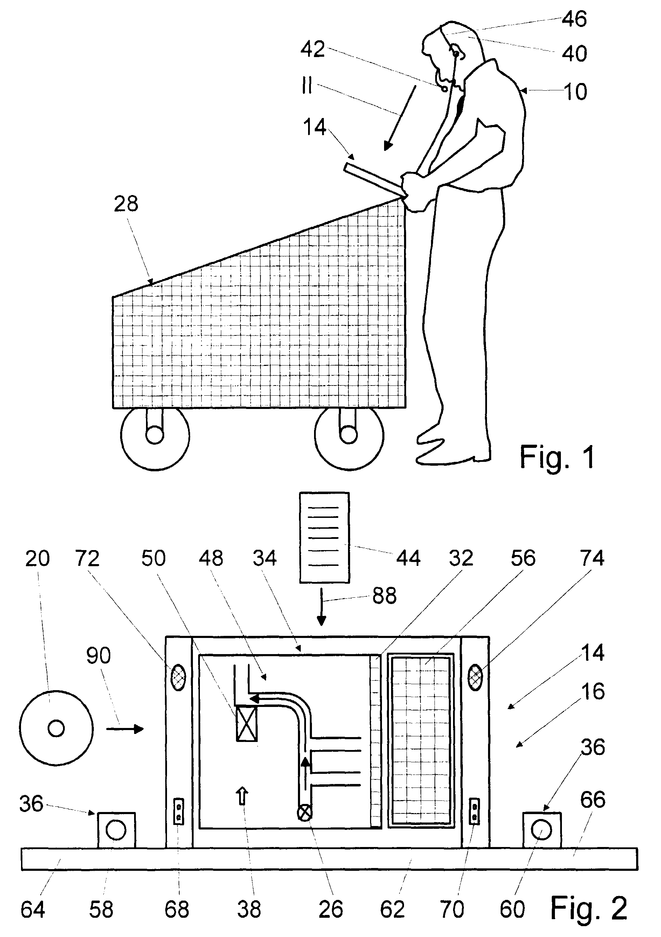

Fig. 1 zeigt ein an einem Einkaufswagen 28 befestigtes mobiles Informationselement 14. Das mobile Informationselement 14 besitzt einen nicht näher dargestellten Mikroprozessor, einen ersten fest eingebauten elektronischen Speicher und einen auswechselbaren elektronischen Speicher 20 in Form einer beschreibbaren Mini-CD (Fig. 2) . Der Speicher 20 kann in Richtung 90 in das mobile Informationselement 14 eingeschoben werden. Im elektronischen Speicher 20 sind Informationen über das örtlich begrenzte Gebiet gespeichert, die von einer Person 10 bzw. von einem Benutzer 10 einzeln über Eingabe- und Ausgabevorrichtungen abgerufen werden können. Als Eingabevorrichtung dient ein Bedienelement 36, ein Kontaktfeld 32, eine Tastatur 56 und ein am Kopf 40 des Benutzers getragenes Mikrophon 42. Das Bedienelement 36 besteht aus einem ersten Eingabeelement 58 und einem zweiten Eingabeelement 60, die an einer Stange 62 zum Schieben des Einkaufswagens 28 im Bereich von Handgriffen 64, 66 befestigt sind. Während des Schiebens des Einkaufswagens 28 kann komfortabel mit dem ersten Eingabeelement 58 ein Zeiger 38 auf einem Bildschirm 34 des mobilen Informationselements 14 auf bestimmte Menüfelder bewegt werden, die anschließend mit dem zweiten Eingabeelement 60 ausgewählt werden können. Die Eingabeelemente 58, 60 können jeweils vorteilhaft mit einem Finger bedient werden, und zwar mit dem Daumen. Über das Kontaktfeld 32 auf dem Bildschirm 34, das verschiedenen Anwendungen leicht angepaßt werden kann, können direkt auf dem Bildschirm 34 durch Berührung einzelner Menüfelder Informationen ausgewählt und eingegeben werden. Neben dem Bedienelement 36 und dem Kontaktfeld 32 können über die Tastatur 56 Informationen ausgewählt und eingegeben werden. Ferner können Informationen über das am Kopf 40 getragene Mikrophon 42 und über am mobilen Informationselement 14 angeordnete Mikrophone 68, 70 über Sprache eingegeben und ausgewählt werden. Für die Spracherkennung ist im mobilen Informationselement 14 im fest eingebauten Speicher ein Spracherkennungsprogramm abgelegt.

Um die manuelle Eingabe einzelner Informationen zu reduzieren und den Komfort zu erhöhen, besitzt das mobile Informationselement 14 eine nicht näher dargestellte Leseeinheit, mit der Informationen von einem Ticket 44 erfaßt werden und abhängig von den erfaßten Informationen Informationen bereitgestellt werden. Das Ticket 44 kann in Richtung 88 in das mobile Informationselement 14 eingeführt werden.

Die gesuchten Informationen werden optisch über den Bildschirm 34 und akustisch über einen Kopfhörer 46 und über am mobilen Informationselement 14 angeordnete Lautsprecher 72, 74 ausgegeben. Im dargestellten Ausführungsbeispiel in Fig. 2 wird eine Wegbeschreibung 48 von einem Standort 26 zu einem gewünschten Zielort 50 ausgegeben.

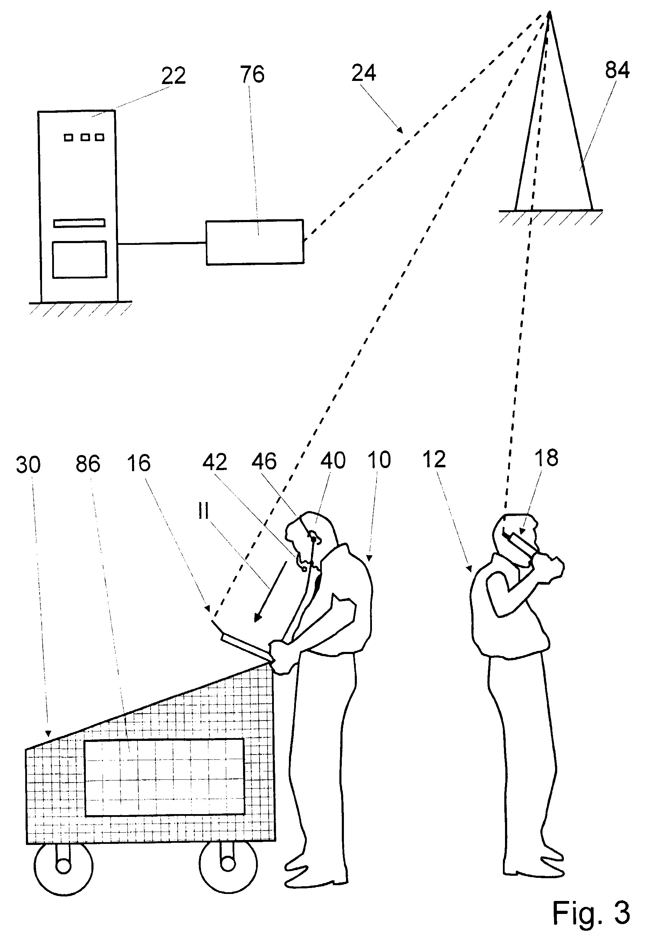

In Fig. 3 sind zwei funkunterstützte mobile Informationselemente 16 und 18 dargestellt. Informationen zur Auswahl bestimmter Informationen werden vom mobilen Informationselement 16, 18 über ein im mobilen Informationselement 16, 18 eingebautes, nicht näher dargestelltes Datenübertragungsgerät, über ein Mobilfunknetz 24, über eine Sendestation 84 und über ein zweites Datenübertragungsgerät 76 zu einem stationären Informationselement 22 übertragen. Vom stationären Informationselement 22 werden die gesuchten Informationen über den gleichen Weg zurück zum mobilen Informationselement 16, 18 übertragen. Das Datenübertragungsgerät 76 ist eine ISDN-Karte, es kann jedoch auch von anderen dem Fachmann geläufigen Datenübertragungsgeräten gebildet werden. Das mobile Informationselement 16 besitzt dieselben Eingabe- und Ausgabevorrichtungen wie das mobile Informationselement 14 (Fig. 2). Fig. 2 zeigt das mobile Informationselement 14 und gleichzeitig das mobile Informationselement 16, die aus der Sicht des Benutzers 10 im wesentlichen identisch sind. Gleiche Bauteile sind grundsätzlich mit den gleichen Bezugszeichen beziffert.

Zusätzlich zu dem mobilen Informationselement 14 können mit dem mobilen Informationselement 16 im stationären Informationselement 22 gespeicherte Informationen zum örtlich begrenzten Gebiet über Funk abgerufen werden. Ferner kann über Funk der Standort 26 des mobilen Informationselements 16 bestimmt werden, indem die Richtung und Laufzeit der Funkwellen bestimmt wird, wodurch die manuellen Eingaben reduziert und der Komfort gesteigert wird. Die Informationen zum örtlich begrenzten Gebiet können vollständig im stationären Informationselement 22 in einem Speicher abgespeichert sein oder auch zumindest teilweise im elektronischen Speicher 20 im mobilen Informationselement 16 (Fig. 2) . Treten Informationsänderungen auf, kann der elektronische Speicher 20 ausgetauscht oder vorteilhaft die neuen Informationen über Funk auf den Speicher 20 übertragen und abgespeichert werden.

Das mobile Informationselement 16 ist ferner gleichzeitig ein Mobiltelefon, mit dem im örtlich begrenzten Gebiet und auch aus dem örtlich begrenzten Gebiet heraus telefoniert werden kann. Um möglichst über eine lange Zeit eine ausreichende Energieversorgung für das mobile Informationselement 16 zu erhalten, wird dieses mit am Einkaufswagen 30 befestigten Solarzellen 86 mit Energie versorgt.

Das mobile Informationselement 18 ist ein tragbares Mobiltelefon, das zusätzlich mit den Funktionen eines Informationselements ergänzt ist. Die Informationseingabe und Informationsausgabe erfolgt im wesentlichen über die Sprache, wobei Informationen auch über eine nicht näher dargestellte Tastatur am Mobiltelefon eingegeben und über einen Bildschirm bzw. ein Display ausgegeben werden können. Das tragbare Informationselement 18 ist im Eigentum des Benutzers 12, so daß keine Vorkehrungen getroffen werden müssen, daß das mobile Informationselement 18 beim Verlassen des örtlich begrenzten Gebiets wieder abgegeben wird.

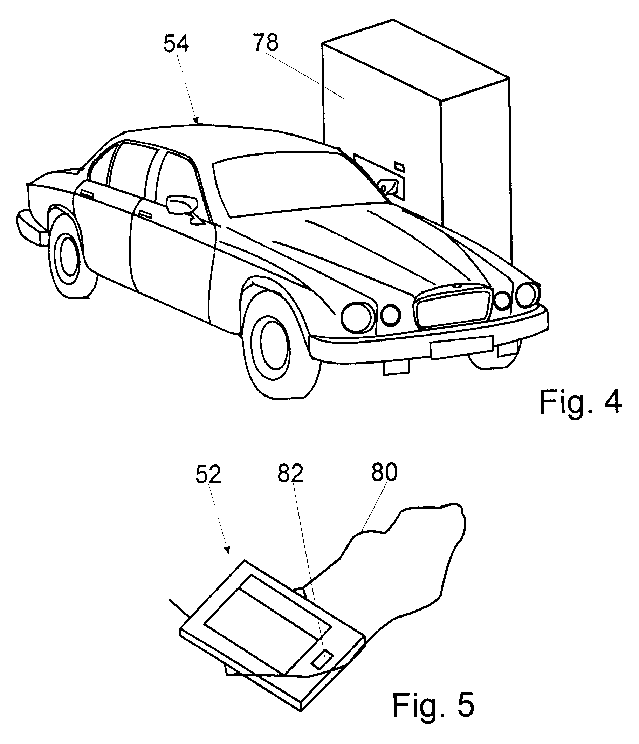

In Fig. 4 ist eine Einfahrt eines Parkhauses mit einem Parkautomaten 78 gezeigt, aus dem ein mobiles Informationselement 52 als Art Parkticket für ein Kraftfahrzeug 54 entnommen werden kann. Wird das Kraftfahrzeug 54 wieder abgeholt, muß das mobile Informationselement 52 wieder abgegeben werden. Das mobile Informationselement 52 kann mit einem Tragegurt 80 um den Hals getragen werden und ist bis auf das Bedienelement 36 identisch mit dem mobilen Informationselement 16. Anstatt dem Bedienelement 36 besitzt das mobile Informationselement 52 ein Tastfeld 82, auch Touchpad genannt, mit dem der Zeiger 38 auf dem Bildschirm 34 bewegt, Menüfelder ausgewählt und Informationen eingegeben werden können.

### Bezugszeichen

- 10: Person
- 12: Person
- 14: Informationselement
- 16: Informationselement
- 18: Informationselement
- 20: Speicher
- 22: Informationselement
- 24: Mobilfunknetz
- 26: Standort
- 28: Fahrzeug
- 30: Fahrzeug
- 32: Kontaktfeld
- 34: Bildschirm
- 36: Bedienelement
- 38: Zeiger
- 40: Kopf
- 42: Mikrophon
- 44: Ticket
- 46: Kopfhörer
- 48: Wegbeschreibung
- 50: Zielort
- 52: Informationselement
- 54: Kraftfahrzeug
- 56: Tastatur
- 58: Eingabeelement
- 60: Eingabeelement
- 62: Stange
- 64: Handgriff
- 66: Handgriff
- 68: Mikrophon
- 70: Mikrophon
- 72: Lautsprecher
- 74: Lautsprecher
- 76: Datenübertragungsgerät
- 78: Parkautomat
- 80: Tragegurt
- 82: Tastfeld
- 84: Sendestation
- 86: Solarzellen
- 88: Richtung
- 90: Richtung

## Patentansprüche

1. Informationssystem für eine oder mehrere Personen (10, 12) für ein örtlich begrenztes Gebiet, wie insbesondere große Gebäude, Gebäudekomplexe, Städte, Innenstädte, mit zumindest einem mobilen Informationselement (14, 16, 18, 52) das ein Rechenwerk, zumindest einen elektronischen Speicher (20) und eine Eingabe- und Ausgabevorrichtung aufweist, dadurch gekennzeichnet, daß im elektronischen Speicher (20) Informationen über das örtlich begrenzte Gebiet gespeichert sind, die vom Benutzer (10) des mobilen Informationselements (14) einzeln über die Eingabe- und Ausgabevorrichtung unterstützt vom Rechenwerk abrufbar sind.

2. Informationssystem nach Anspruch 1, dadurch gekennzeichnet, daß der elektronische Speicher (20) austauschbar ist.

3. Informationssystem nach dem Oberbegriff des Anspruchs 1, dadurch gekennzeichnet, daß das mobile Informationselement (16, 18, 52) über Funk mit zumindest einem stationären Informationselement (22) verbunden ist, in der Informationen zum örtlich begrenzten Gebiet abgespeichert und über Funk vom Benutzer (10, 12) abrufbar sind.

4. Informationssystem nach Anspruch 3, dadurch gekennzeichnet, daß das mobile Informationselement (16, 18, 52) über ein Mobilfunknetz (24) für Mobiltelefone mit dem stationären Informationselement (22) verbunden ist.

5. Informationssystem nach Anspruch 3 oder 4, dadurch gekennzeichnet, daß über Funk der Standort (26) des mobilen Informationselements (16, 18, 52) bestimmbar ist und abhängig vom Standort (26) Informationen im stationären Informationselement (22) bereit gestellt werden.

6. Informationssystem nach einem der Ansprüche 3 bis 5, dadurch gekennzeichnet, daß Informationen über Funk in den elektronischen Speicher (20) übertragbar sind.

7. Informationssystem nach einem der Ansprüche 3 bis 6, dadurch gekennzeichnet, daß das mobile Informationselement (16, 18, 52) ein Mobiltelefon ist.

8. Informationssystem nach einem der vorhergehenden Ansprüche, dadurch gekennzeichnet, daß das mobile Informationselement (14, 16) an einem Fahrzeug (28, 30) befestigt ist.

9. Informationssystem nach einem der vorhergehenden Ansprüche, dadurch gekennzeichnet, daß das mobile Informationselement (14, 16, 18) zumindest ein Kontaktfeld (32) auf einem Bildschirm (34) und/oder ein Bedienelement (36), mit dem ein Zeiger (38) auf dem Bildschirm (34) bewegt werden kann, aufweist, mit denen Informationen auswählbar und/oder eingebbar sind.

10. Informationssystem nach einem der vorhergehenden Ansprüche, dadurch gekennzeichnet, daß an dem mobilen Informationselement (14, 16, 18, 52) Informationen über zumindest eine Sprache eingebbar und einzelne Informationen auswählbar sind.

11. Informationssystem nach Anspruch 10, dadurch gekennzeichnet, daß die Informationen über ein am Kopf (40) des Benutzers (10) getragenen Mikrophons (42) eingebbar und einzelne Informationen auswählbar sind.

12. Informationssystem nach einem der vorhergehenden Ansprüche, dadurch gekennzeichnet, daß das mobile Informationselement (14, 16, 52) eine Leseeinheit aufweist, mit der Informationen von einem Ticket (44) erfaßbar sind und abhängig von den erfaßten Informationen Informationen bereitgestellt werden.

13. Informationssystem nach einem der vorhergehenden Ansprüche, dadurch gekennzeichnet, daß das mobile Informationselement (14, 16, 18, 52) die Informationen akustisch ausgibt.

14. Informationssystem nach Anspruch 13, dadurch gekennzeichnet, daß das mobile Informationselement (14, 16, 52) die Informationen über einen Kopfhörer (46) ausgibt.

15. Informationssystem nach einem der vorhergehenden Ansprüche, dadurch gekennzeichnet, daß am mobilen Informationselement (14, 16, 18, 52) eine Wegbeschreibung (48) von einem Standort (26) zu einem gewünschten Zielort (50) abrufbar ist.

16. Informationssystem nach einem der vorhergehenden Ansprüche, dadurch gekennzeichnet, daß das mobile Informationselement (16) über Solarzellen (86) mit Energie versorgt ist.

17. Informationssystem nach Anspruch 8 und 16, dadurch gekennzeichnet, daß die Solarzellen (86) am Fahrzeug (30) befestigt sind.

18. Verfahren zum Einsatz des Informationssystems nach einem der vorhergehenden Ansprüche, dadurch gekennzeichnet, daß das mobile Informationselement (52) beim Parken eines Kraftfahrzeugs (54) ausgegeben wird und vom Benutzer abgegeben werden muß, um das Kraftfahrzeug (54) abzuholen.
